(19) Europäisches Patentamt
European Patent Office
Office européen des brevets

(11) EP 1 042 695 B1

(12) **EUROPÄISCHE PATENTSCHRIFT**

(45) Veröffentlichungstag und Bekanntmachung des Hinweises auf die Patenterteilung:
**23.05.2007 Patentblatt 2007/21**

(21) Anmeldenummer: **98966553.4**

(22) Anmeldetag: **14.12.1998**

(51) Int Cl.:
***G02B 6/032*** *(2006.01)* ***G02B 1/04*** *(2006.01)*
***C08F 214/26*** *(2006.01)*

(86) Internationale Anmeldenummer:
**PCT/DE1998/003707**

(87) Internationale Veröffentlichungsnummer:
**WO 1999/031536 (24.06.1999 Gazette 1999/25)**

# (54) LICHTLEITER MIT FLÜSSIGEM KERN

LIGHT GUIDE WITH A LIQUID CORE

GUIDE DE LUMIERE A COEUR LIQUIDE

(84) Benannte Vertragsstaaten:
**AT CH DE GB LI**

(30) Priorität: **15.12.1997 DE 29722130 U**
**17.12.1997 DE 19756197**
**23.12.1997 DE 19757683**
**13.07.1998 DE 19831365**
**25.09.1998 DE 19844153**

(43) Veröffentlichungstag der Anmeldung:
**11.10.2000 Patentblatt 2000/41**

(73) Patentinhaber: **Nath, Günther**
**82041 Deisenhofen (DE)**

(72) Erfinder: **Nath, Günther**
**82041 Deisenhofen (DE)**

(74) Vertreter: **Eisenführ, Speiser & Partner**
**Patentanwälte Rechtsanwälte,**
**Postfach 31 02 60**
**80102 München (DE)**

(56) Entgegenhaltungen:
**EP-A- 0 349 126** **EP-A- 0 357 354**
**EP-A- 0 421 387** **EP-A- 0 438 170**
**EP-A- 0 459 132** **EP-A- 0 633 257**
**EP-A- 0 645 406** **EP-A- 0 803 557**
**US-A- 5 412 750**

- **RUSSO A.; NAVARRINI W.: 'Perfluoro-4-Methyl-1,3-Dioxole: A new monomer for high Tg amorphous fluoroplastics' 12TH EUROPEAN SYMPOSIUM ON FLUORINE CHEMISTRY 29 August 1998, BERLIN, GERMANY, Seite PI-32, XP009064989**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft einen Flüssigkeitslichtleiter gemäß dem Oberbegriff des Patentanspruches 1.

Lichtleiter mit flüssigem Kern sind allgemein bekannt. Sie bestehen in der Regel aus einem biegsamen Mantelschlauch mit einer Innenbeschichtung aus einem amorphen Polymer und einer lichtleitenden, wässrigen Lösung im Innern des Schlauchs.

Aus der deutschen Patentanmeldung DE-OS 42 33 087 ist ein Flüssigkeitslichtleiter bekannt, welcher einen zylindrischen schlauchartigen Mantel, bestehend aus einem Fluorkohlenstoff-Polymer, und einen vom Mantel umgebenden Kern aus einer lichtleitenden wässrigen Lösung enthält. Der Mantel ist auf seiner Innenseite mit einer dünnen Schicht aus einem vollständig amorphen Copolymer, das auf einer Kombination von Tetrafluorethylen und einem perfluorierten zyklischen Ether basiert, überzogen. Das Copolymer, aus dem die Innenschicht besteht, ist von der Firma DuPont unter dem Handelsnamen Teflon® AF erhältlich.

Teflon® AF lässt sich in bestimmen perfluorierten Flüssigkeiten nur im Bereich weniger Prozente lösen, wobei sich als Lösungsmittel die Fluorinert-Flüssigkeiten FC 72, FC 75 (Perfluoro n-buthyl-tetrahydrofuran), FC 77 oder FC 40 von der Firma 3M eignen. Das Aufbringen der AF-Schicht auf die Innenoberfläche eines Fluorkohlenstoff-Schlauchs wie z.B. Teflon® FEP geschieht in einfacher Weise durch eine einmalige Benetzung der Schlauchinnenfläche mit der Teflon® AFhaltigen Lösung und anschließender Verdunstung des Lösungsmittels mit Hilfe eines Luftstroms oder Unterdrucks. Die Dicke der so erhaltenen Schicht beträgt nur einige wenige $\mu$m, was im Falle eines Teflon® FEP-Substrat-Schlauches oder eines Hyflon® MFA-Schlauches für die Glättung von Schlauchunebenheiten und für die Verbesserung der Totalreflexion von sichtbaren und ultravioletten Strahlen ausreichend ist, da sich FEP- und MFA-Schläuche mit einer sehr glatten Innenoberfläche extrudieren lassen (Rauhigkeit: $10^{-2}$ bis $10^{-1}$ $\mu$m). Die Vorteile der totalreflektierenden Teflon®-AF-Schicht bestehen in dem extrem niedrigen Brechungsindex des Materials im Bereich 1,29 bis 1,32, der absoluten Transparenz, die mit Quarzglas vergleichbar ist, und der chemischen Inertheit. Als Flüssigkeiten für den Lichtleiter werden die bereits seit über zwanzig Jahren auf dem Markt bewährten, in DE 24 06 424 C2 und DE-OS 40 14 363.5 beschriebenen wässrigen salzhaltigen Lösungen wie Chloride oder Phosphate wegen ihrer photochemischen Stabilität im ultravioletten Spektralbereich bevorzugt. Diese Flüssigkeiten, wie z.B. $CaCl_2$ in $H_2O$, $NaH_2PO_4$ in $H_2O$ sollten einen Brechungsindex aufweisen, der höher ist als der der totalreflektierenden Teflon®-AF-Schicht, wobei wegen des extrem niedrigen Brechungsindex der Teflon®-AF-Schicht bereits Brechzahlen ab n = 1,36 für die Flüssigkeit verwendet werden können. Ein Wert von mindestens 50° für den optischen Aperturwinkel $2\alpha$ sollte erreicht werden, wobei sich $\alpha$ mit Hilfe der einfachen Formel:

$$\sin\alpha = \sqrt{n_{Kern}^2 - n_{Mantel}^2}$$

berechnen lässt.

Flüssigkeitslichtleiter mit einem Kern, bestehend aus einer wässrigen Phosphat-Lösung, wie z.B. einer Lösung von $NaH_2PO_4$ in Wasser, die eine besonders hohe photochemische Stabilität in kurzwelligen ultravioletten UVB und UVC Spektralbereich aufweist (s. P 40 14 363.5), lassen sich eigentlich nur durch Verwendung einer totalreflektierenden Schicht mit einem Brechungsindex von etwa 1,31 wie z.B. mit Teflon® AF 1600 realisieren, da derartige Lösungen keinen wesentlich höheren Brechungsindex als n = 1,38 zulassen wegen Salzausfalls in der Kälte.

Die Verwendung von Teflon® AF für die Innenbeschichtung von Lichtleiterschläuchen ist jedoch nicht ganz unproblematisch.

Schichten, bestehend aus Teflon® AF, haften nur gut auf Substraten, die wie AF ebenfalls aus Fluorkohlenstoff-Polymeren bestehen, insbesondere nach Durchführung eines Temperungsprozesses, bei welchem die Schicht und der Substratschlauch auf Temperaturen bis über die Temperatur des Glasüberganges (Tg) der verwendeten AF-Modifikation erhitzt werden müssen.

Bei dem die Haftung verbessernden und von DuPont vorgeschriebenen Temperungsprozess muss das System Schicht-Substrat auf Temperaturen über 160°C und je nach Modifikation des AF-Materials sogar über 240°C erhitzt werden, was eigentlich nur von Substratmaterialien aus Fluorkohlenstoffpolymeren toleriert wird.

Des weiteren ist die geringe Löslichkeit der Teflon® AF-Modifikationen in den perfluorierten Lösungsmitteln FC75/FC77 (3M) zu nennen, die es nicht immer erlaubt, vor allem bei Substratschläuchen aus Teflon® PFA, die erforderliche Mindestschichtdicke von bis zu 5 $\mu$m durch einen einmaligen Benetzungsvorgang der Schlauchinnenoberfläche mit der Teflon® AF-Lösung zu erzeugen, vor allem bei den AF-Modifikationen mit Tg > 160°C.

Extrudierte Schläuche aus Teflon® PFA haben im Vergleich zu solchen aus Teflon® FEP eine größere Rauhigkeit der Innenoberfläche (> $10^{-1}$ $\mu$m) und benötigen daher für eine optimale optische Totalreflexion eine größere

Dicke der Innenschicht als beschichtete FEP-Schläuche.

Ein gravierender Nachteil von Teflon® AF besteht in seinem extrem hohen Preis von US $ 10,00 pro Gramm, der bei der Herstellung der Flüssigkeitslichtleiter merklich zu Buche schlägt.

Es wäre auch wünschenswert, ein optisches Beschichtungsmaterial für die Totalreflexion auch für andere Substratmaterialien als Teflon® FEP zur Verfügung zu haben, um Flüssigkeitslichtleiter mit anderen mechanischen Eigenschaften wie z.B. erhöhter Flexibilität herstellen zu können. Ein derartiges Beschichtungsmaterial sollte eine gegenüber Teflon AF wesentlich erhöhte Löslichkeit in fluorierten Flüssigkeiten besitzen, sodass durch einen einmaligen Benetzungsvorgang Schichtdicken von bis zu 5 μm erzielt werden können, wie sie z.B. für die Beschichtung von Teflon® PFA- oder THV (3M)-Schläuchen erforderlich sind.

Dieses Beschichtungsmaterial wäre vorzugsweise ein perfluoriertes amorphes Polymer, welches eine Glasübergangstemperatur deutlich unterhalb 160°C aufweist.

Desweiteren sollte ein solches zu Teflon® AF alternatives perfluoriertes Beschichtungsmaterial weitestgehend transparent oder amorph sein, einen Brechungsindex besitzen, der möglichst unterhalb dem von $H_2O$ liegt und ebenfalls wie Teflon® AF in gewissen perfluorierten Flüssigkeiten wie FC 75 oder FC 77 von 3M, vorzugsweise aber in erhöhtem Maße löslich sein, sodass ein einfaches Beschichtungsverfahren für die Innenoberfläche von Plastik-Schläuchen durch einmalige Benetzung mit der Lösung des amorphen Fluorpolymers möglich ist.

Letztlich wäre es wünschenswert, wenn das zu AF alternative perlfuorierte amorphe Copolymer einfacher herzustellen wäre und somit auf dem Markt zu einem Preis deutlich unterhalb 10,00 US $/g angeboten werden könnte.

Natürlich ist es auch wichtig, dass das alternative Beschichtungsmaterial auf Teflon® FEP oder Hyflon® MFA oder THV (3M), den wichtigsten Schlauchmaterialien für Flüssigkeitslichtleiter gut haftet, auf jeden Fall aber nach Durchführung eines Temperungsprozesses oberhalb der Glasübergangstemperatur des Beschichtungsmaterials.

Von der Firma Ausimont S.p.A. wird in der EO 0 633 257 B1 und in der EP 0 803 557 A1 ein perfluoriertes Copolymer von Tetrafluorethylen (TFE) beschrieben, welches neben TFE noch ein weiteres perfluoriertes Monomer in Form eines zyklischen perfluorierten Fluordioxols mit folgender Struktur enthält:

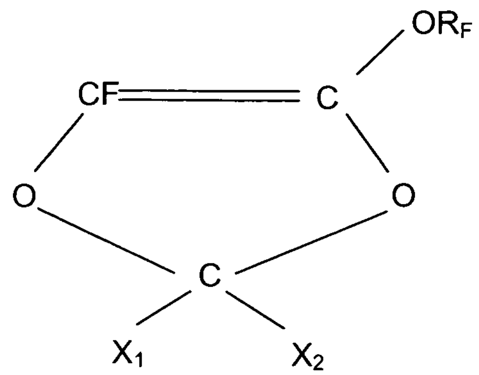

wobei $R_F$ ein Perfluoralkyl mit 1 bis 5 C-Atomen und $X_1X_2$ unabhängig voneinander -F oder $-CF_3$ sein können.

Erfindungsgemäß wird für den Flüssigkeitslichtleiter, wie in Anspruch 1 definiert, ein Fluorkohlenstoffpolymer eingesetzt, das 10 bis 100 Mol% des perfluorierten zyklischen Monomers der Formel

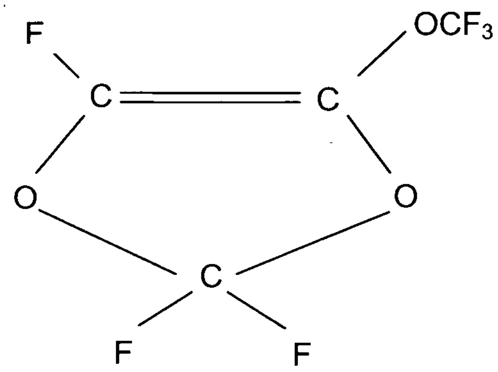

aufweist.

Neben diesem neuen zyklischen perfluorierten Fluordioxol können anstelle von oder zusätzlich zu TFE noch weitere Einheiten von perfluorierten Monomeren wie Hexafluorpropylen (HFP) oder Perfluoralkylvinyläther oder Perfluoro-2,2-dimethyl-1,3-dioxol (PDD) in dem Copolymer enthalten sein.

Man kann die quantitative Zusammensetzung dieses perfluorierten Copolymers aus den genannten Monomer-Komponenten so variieren, dass man ein weitestgehend amorphes Material erhält, welches in der Flüssigkeit FC 75 (3M) im Prozentbereich, und zwar bis zu 20 %, löslich ist, einen optischen Brechungsindex (gemessen bei $\lambda$ = 400 nm) zwischen 1,318 - 1,328 aufweist, eine hervorragende Transparenz im ultravioletten und sichtbaren Spektralbereich hat und darüber hinaus eine Glasübergangstemperatur zwischen 60°C und 170°C je nach quantitativer molekularer Zusammensetzung besitzt.

Es werden Copolymere aus Einheiten von TFE und dem Fluordioxol bevorzugt, bei denen der molare Anteil des Fluordioxols zwischen 40 % und 100 % liegt, die eine äußerst geringe Restkristallinität besitzen und die sich zu mehr als 10 Gewichtsprozenten in perfluorierten Flüssigkeiten, wie z.B. FC 75 (3M) oder in niedrig siedenden Perfluorpolyäthern, wie z.B. Galden® D80 gut lösen lassen und somit eine wesentlich höhere Löslichkeit als Teflon® AF aufweisen, und zwar bei vergleichbaren Werten der Viskosität der Lösungen. Der Handelsnahme für die Copolymere bestehend aus den Monomer-Komponenten TFE und dem neuen Fluordioxol ist Hyflon® AD.

Darüberhinaus wird in der EP 0 633 257 B1 und in der EP 0 803 557 A1 ein Homopolymer aus dem 2,2,4-Trifluoro-5-trifluoromethoxy-1,3-dioxol beschrieben (abgekürzt TTD), welches folgende Struktur hat:

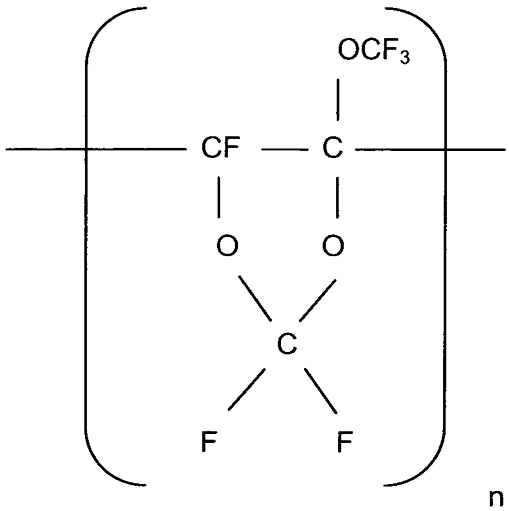

Für n > 10 ist dieses Homopolymer ein amorphes festes Fluorpolymer, welches glasklar ist, sich in gewissen perfluorierten Flüssigkeiten wie z.B. FC 75 (3M) in einem hohen Prozentbereich löst, einen sehr niedrigen Brechungsindex hat (n ~ 1,32) und sich somit ebenso wie die vorher beschriebenen Copolymere TFE/TTD für optische Beschichtungen durch einfaches Benetzen eines Substrats mit dem gelösten Polymer eignet.

Da diese Ausimont-Materialien nicht, wie Teflon® AF, die technisch schwer zu beherrschende Monomer-Komponente PDD (Perfluoro-2,2-dimethyl-1,3dioxol) enthalten, lassen sie sich auch einfacher herstellen und man könnte sie zumindest prinzipiell auch preiswerter anbieten.

Die Haftung des amorphen Copolymers Hyflon® AD von Ausimont, bestehend aus Einheiten von Tetrafluorethylen und dem Fluorodioxol TTD oder einem Homopolymeren aus TTD-Einheiten, auf den Innenflächen der für Flüssigkeitslichtleiter bevorzugten Schlauchmaterialien aus Fluorkohlenstoff-Polymeren wie z.B. Teflon® FEP, Hyflon® MFA, THV (3M) ist hervorragend, insbesondere nach Temperung oberhalb der Glasübergangstemperatur der verwendeten Modifikation.

Es lassen sich auch mit diesen neuen amorphen Copolymeren durch einen einmaligen Benetzungsvorgang Schichtdicken im Bereich von einigen µm erzielen,
wobei die Haftung der Schicht auf den perfluorierten Substratmaterialien Teflon® FEP und Hyflon® MFA insbesondere nach Temperung oberhalb der Glasübergangstemperatur Tg des Schichtmaterials hervorragend ist.

Neben dem zyklischen perfluorierten Fluordioxol PMD können anstelle von oder zusätzlich zu TFE noch weitere Einheiten von perfluorierten Monomeren wie Hexafluorpropylen (FEP) oder Perfluoralkylvinyläther oder Perfluoro-2,2-dimethyl-1,3-dioxol (PDD) in dem Copolymer enthalten sein.

Generell lassen sich die von dem Fluordioxol PDD, welches in Teflon® AF enthalten ist, abweichenden Fluordioxole, die mit TFE zu neuen amorphen, perfluorierten Materialien copolymerisiert werden können, die auch in gewissen perfluorierten Flüssigkeiten wie z.B. in FC 75 von 3M löslich sind und sich somit für Beschichtungen aus flüssiger Phase eignen, in der folgenden Weise allgemein darstellen:

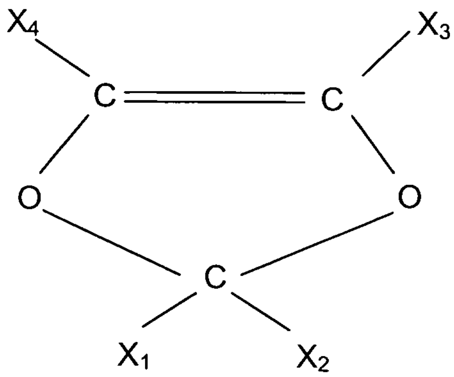

25

wobei $X_1$, $X_2$, $X_3$ und $X_4$ folgende Bedeutung haben:

$X_1$ und $X_2$ stehen unabhängig voneinander für F oder $C_nF_{2n+1}$ und

$X_1$ oder $X_2$ auch für $O\text{-}C_nF_{2n+1}$ und

$X_3$ und $X_4$ unabhängig voneinander für F, $C_nF_{2n+1}$ oder $O\text{-}C_nF_{2n+1}$,

wobei n eine ganze Zahl von 1 bis 5 bedeutet,

ausgenommen Fluordioxole, in denen
$X_1$ und $X_2$ für $CF_3$ sowie
$X_3$ und $X_4$ für F stehen (= Teflon® AF).

Die Verbesserung der Transmission von bekannten Flüssigkeitslichtleitern, bestehend auf Teflon® FEP- oder Hyflon® MFA-Schläuchen, gefüllt mit wässrigen salzhaltigen Lösungen, sowie die Erhöhung der numerischen Apertur der Lichtleiter durch Innenbeschichtung der Schläuche mit den neuen Ausimont-Copolymeren TFE/TTD ist ähnlich gut wie bei der Innenbeschichtung mit Teflon® AF so wie beschrieben in P 42 33 087. Besonders vorteilhaft ist jedoch, dass man jetzt z.B. mit dem gelösten Copolymer TFE/TTD aufgrund seiner im Vergleich zu Teflon® AF wesentlich höheren Löslichkeit nicht nur Schläuche aus Teflon® FEP, sondern auch solche aus Teflon® PFA und THV (3M) in einfacher Weise durch einen einmaligen Benetzungsvorgang mit einer Innenschicht von bis zu 5 µm Dicke und sogar darüber hinaus versehen kann, was auch die Verwendung derartiger beschichteter Schläuche als Mantelschläuche für Flüssigkeitslichtleiter mit optimaler Transmission gestattet. Auch kann man dünnere Kapillarschläuche (ø i < 3 mm) aus Fluorkohlenstoff-Polymeren mit dem Ausimont-Copolymer TFE/TTD leichter beschichten als mit Teflon® AF, weil hierfür die geringere Viskosität der Ausimont Polymerlösung bei gleichzeitig höherem Feststoffgehalt sehr günstig wirkt, und somit die Erzeugung einer ausreichenden Schichtdicke von einigen μm möglich ist. Überraschenderweise lässt sich zu dem Copolymeren TFE/TTD bzw. dem Homopolymeren von TTD ein Perfluorpolyether (PFPE), wie z.B. Galden® (Ausimont) oder Fomblin® (Ausimont) oder Krytox® (DuPont) oder Demnum® (Daikin) beimischen, wobei man bis zu 200 Gewichtsprozente des PFPE beimischen kann, um auf diese Weise die Kosten für eine Schicht mit definierter Schichtdicke weiter abzusenken. Die Mischschicht lässt sich in einfacher Weise herstellen, durch Beigabe einer entsprechenden Menge des PFPE in die TFE/TTD-FC75-Lösung. Vorzugsweise hat der beigemischte PFPE einen Siedepunkt > 220 °C, noch besser > 250°C, sodass der PFPE bei Erwärmung nicht aus der Schicht ausdiffundiert und permanent in der Schicht verbleibt, auch nach Temperung bei 180°C.

Ebenfalls ist es unerwarteterweise möglich, eine transparente Mischschicht herzustellen, welche sowohl Anteile eines Copolymers von TFE/PDD (Teflon® AF) als auch Anteile von TFE/TTD (Ausimont Hyflon® AD) oder TFE/PDM enthält, d.h. man kann eine Lösung in FC 75 herstellen, in der sowohl Teflon® AF als auch Hyflon® AD und TFE/PDM gelöst sind. Auf diese Weise enthält man nach Abdunstung von FC 75 Schichten, welche zwar nicht amorph, aber doch sehr transparent sind und alle denkbaren Zwischenwerte des Brechungsindex zwischen AF und AD je nach Mischungsverhältnis aufweisen können.

In einem ersten Ausführungsbeispiel des erfindungsgemäßen Flüssigkeitslichtleiters besteht der schlauchförmige Mantel aus Teflon® FEP oder Hyflon® MFA und weist folgende Maße auf: $Ø_i$ = 5 mm, $Ø_a$ = 6 mm, L = 3000 mm. Auf seiner Innenoberfläche ist der FEP-Schlauch mit einer ca. 3 bis 4 μm dicken Schicht aus dem Ausimont-Copolymer TFE/Fluordioxol TTD mit einem TTD-Gehalt von 60 Mol-Prozent (Handelsname: Hyflon® AD 60) versehen, welche aus Lösung durch einfaches Benetzen der Schlauchinnenfläche mit dem gelösten Polymer und anschließender Verdunstung des perfluorierten Lösungsmittels (FC 75 von 3M) hergestellt wird.

Eine anschließende Temperung des mit dem Copolymer TFE/TTD beschichteten Schlauches oberhalb der Glasübergangstemperatur des Copolymers bei ca. 145°C bis 180°C verbessert ganz wesentlich die Haftung der Schicht auf dem Substrat. Nach dem Tempern wird der beschichtete FEP-Schlauch mit einer wässrigen ionischen Lösung, z.B. mit einer wässrigen $CaCl_2$ (n = 1,435) oder $NaH_2PO_4$ (n = 1,38) Lösung gefüllt, wobei die offenen Enden des FEP-Schlauches in bekannter Weise mit zylindrischen polierten Stöpseln aus Quarzglas abgedichtet werden.

Statt wässriger ionischer Salzlösungen können als Füllflüssigkeiten auch Glykole wie z.B. Triethylenglykol oder DMSO mit Zusätzen von Wasser verwendet werden. Auch reines Wasser als Füllflüssigkeit weist schon eine geringe Lichtleitung auf wegen des kleineren Brechungsindexes des amorphen Copolymers (TFE/TTD) bzw. Homopolymers (TTD) von Ausimont.

In den verschiedenen Füllflüssigkeiten vorkommendes $H_2O$ kann auch teilweise oder ganz durch $D_2O$ ersetzt werden, was eine Verbesserung der Transmission im roten Spektralbereich zur Folge hat.

Die Transmission eines derartigen, mit dem Copolymer TFE/TTD innen beschichteten Flüssigkeitslichtleiters im blauen und auch im nahen ultravioletten Spektralbereich etwa von 320 bis 400 nm beträgt 80 %, wobei nur 65 % Transmission gemessen wird, wenn der FEP-Schlauch innen nicht beschichtet ist. Die Flüssigkeit ist in diesem Ausführungsbeispiel eine wässrige $CaCl_2$-Lösung mit n = 1,435, die in den letzten 20 Jahren auf dem Markt fast ausschließlich benützte Standardflüssigkeit für Flüssigkeitslichtleiter mit Teflon® FEP-Schlauch.

Die Biegeverluste eines derartigen beschichteten Flüssigkeitslichtleiters (Dicke der Schicht = 4 μm n Schicht = 1,323) reduzieren sich um ca. 100 % gegenüber dem unbeschichteten Lichtleiter.

In einem zweiten Ausführungsbeispiel eines Flüssigkeitslichtleiters gemäß der Erfindung ist der schlauchförmige Mantel ebenfalls wie im ersten Beispiel ein Teflon® FEP-Schlauch mit den Maßen: $Ø_i$ = 5 mm, l = 3000 mm, der auf seiner Innenoberfläche mit einer Mischung aus Teflon® AF 1600 (zu 40 Gewichtsprozenten) und Hyflon® AD 60 (zu 60 Gewichtsprozenten) beschichtet ist. Die Dicke der Schicht beträgt 4,5 μm. Der optische Brechungsindex der Schicht beträgt n = 1,317. Die Füllflüssigkeit ist wieder, wie im ersten Beispiel, $CaCl_2/H_2O$, n = 1,435. Die Transmission dieses Flüssigkeitslichtleiters beträgt ebenfalls 80 % im blauen Spektralbereich und stellt somit ebenfalls einen Spitzenwert für innen beschichtete Flüssigkeitslichtleiter dar.

Der Vorteil der Mischschicht besteht darin, dass durch das Mischungsverhältnis AD zu AF sowohl der Brechungsindex als auch die Dicke der Schicht je nach Notwendigkeit für optimale Transmission eingestellt werden können. Die Haftung der Mischschicht auf Schläuchen aus Kohlenstoff-Fluor-Polymeren, wie z.B. Teflon® FEP oder Hyflon® MFA, ist vor allem nach Temperung oberhalb 160°C hervorragend.

Es ist auch möglich, Mischschichten herzustellen, welche nicht nur die Komponenten Hyflon® AD und/oder TFE/PDM und Teflon® AF, sondern zusätzlich noch als dritte Komponente einen der oben erwähnten hochsiedenden Perfluorpolyether (PFPE) wie Fomblin®, Galden®, Kytox® oder Demnum® als permanenten Bestandteil enthalten.

Alle vier Materialien: Hyflon® AD, TFE/PDM, Teflon® AF und PFPE lassen sich gleichzeitig in der perfluorierten Flüssigkeit (z.B. FC 75 oder FC 77 von 3M) im Prozentbereich lösen, und die komplexe Schicht kann in einfacher Weise durch einmaliges Benetzen der Schlauchinnenoberfläche mit der Lösung und darauf folgendem Abdunsten des Lösungsmittels FC 77 hergestellt werden. Die permanente Anwesenheit des PFPE-Öls in der getrockneten und getemperten Schicht erlaubt es, die elastischen Eigenschaften und die Haftfähigkeit der Schicht auf der jeweiligen Substratunterlage günstig zu beeinflussen. Die Schicht wird durch das PFPE elastischer und klebriger und somit besser haftend auf nicht perfluorierten Substratunterlagen, welche z.B. nur teilfluoriert sein können oder überhaupt kein Fluor enthalten.

Weitere Ausführungsformen werden im folgenden beschrieben:

A) Ein erfindungsgemäßer Flüssigkeitslichtleiter, bei dem die dünne Schicht bildende perfluorierte Fluorkohlenstoff-Polymer als Monomer-Einheiten mindestens zwei Fluordioxole unterschiedlicher Struktur umfasst.

B) Der Flüssigkeitslichtleiter gemäß A, bei dem als weitere Monomer-Einheit im die dünne Schicht bildenden perfluorierten Fluorkohlenstoff-Polymer Tetrafluorethylen vorhanden ist.

C) Ein erfindungsgemäßer Flüssigkeitslichtleiter, bei dem der Anteil an Fluordioxol in dem die Schicht bildenden perfluorierten Fluorkohlenstoff-Polymer 20 bis 95 Mol% beträgt.

D) Der Flüssigkeitslichtleiter gemäß C), bei dem der Anteil des Fluordioxols TTD zwischen 30 und 95 %, vorzugsweise zwischen 50 und 95 %, bezogen auf das Molgewicht des die dünne Schicht bildenden perfluorierten Fluorkohlenstoff-Polymers beträgt und dass die Glasübergangstemperatur dieses Polymers größer als 80°C ist.

E) Ein erfindungsgemäßer Flüssigkeitslichtleiter, bei dem die Glasübergangstemperatur des die dünne Schicht bildenden perfluorierten Fluorkohlenstoff-Polymers zwischen 60 und 240°C, vorzugsweise unterhalb 220°C liegt.

F) Der Flüssigkeitslichtleiter gemäß E), bei dem die Glasübergangstemperatur des die dünne Schicht bildenden perfluorierten Fluorkohlenstoff-Polymers zwischen 60 und 170°C liegt.

G) Ein erfindungsgemäßer Flüssigkeitslichtleiter, bei dem der dünnen Schicht aus dem perfluorierten Fluorkohlenstoff-Polymer ein hochviskoser Perfluorpolyether mit einem Siedepunkt von mindestens 220°C, wie z.B. Galden® (Ausimont), Fomblin® (Ausimont), Krytox® (DuPont) oder Demnum® (Daikin) beigemischt ist.

H) Der Flüssigkeitslichtleiter gemäß G), bei dem der Perfluorpolyether, welcher dem die dünne Schicht bildenden perfluorierten Fluorkohlenstoff-Polymer in einem Verhältnis von 5:100 bis 200:100 Gewichtsteilen beigemischt ist, enthalten ist.

I) Ein erfindungsgemäßer Flüssigkeitslichtleiter, bei dem das die dünne Schicht bildende perfluorierte Fluorkohlenstoff-Polymer zusätzlich ein amorphes Copolymer Teflon® AF enthält.

J) Der Flüssigkeitslichtleiter gemäß I), bei dem das amorphe Copolymer Teflon® AF in der Schicht mit einem Gewichtsanteil zwischen 5 % und 80% enthalten ist, wobei die Glasübergangstemperatur der Teflon® AF-Modifikation zwischen 120°C und 240°C liegt.

K) Ein erfindungsgemäßer Flüssigkeitslichtleiter, bei dem die Dicke der dünnen Schicht zwischen 0,1 μm und 10 μm liegt.

L) Der Flüssigkeitslichtleiter gemäß K), bei dem die Dicke der dünnen Schicht 2 bis 6 μm beträgt.

M) Ein erfindungsgemäßer Flüssigkeitslichtleiter, bei dem der zylindrische, schlauchförmige Mantel aus einem Fluorkohlenstoff-Polymer wie Teflon® FEP, Hyflon® MFA, Teflon® PFA, Teflon® PTFE, Teflon® ETFE, Teflon® PCTFE oder THV® (3M) besteht.

N) Ein erfindungsgemäßer Flüssigkeitslichtleiter, bei dem die den Innenraum des schlauchförmigen, innen beschichteten Mantels ausfüllende Flüssigkeit Wasser oder eine wässrige salzhaltige Lösung von z.B. $CaCl_2$ und/oder $CaBr_2$ oder $NaH_2PO_4$ ist, wobei Wasser auch schweres Wasser oder eine Mischung aus Wasser und schwerem Wasser sein kann.

O) Ein erfindungsgemäßer Flüssigkeitslichtleiter, bei dem die Flüssigkeit Glykol, wie Triethylenglykol, oder Dimethylsulfoxid (DMSO) enthält.

P) Erfindungsgemäß werden die oben definierten erfindungsgemäßen perfluorierten Homo- oder Copolymeren für

die Innenbeschichtung von flexiblen Mantelschläuchen für Flüssigkeitslichtleiter verwendet, wobei die Innenbeschichtung eine Dicke von 0,1 bis 10 μm besitzt und die innere Totalreflexionsschicht des Flüssigkeitslichtleiter bildet, wobei die Totalreflexionsschicht einen kleineren Brechungsindex als die Flüssigkeit besitzt.

Q) Ein Verfahren zur Herstellung eines erfindungsgemäßen Flüssigkeitslichtleiters, bei dem die oben für die dünne Schicht beschriebenen Homo- oder Copolymere in einer fluorierten oder perfluorierten Flüssigkeit im Konzentrationsbereich von mindestens 0,5 Gew.-%, vorzugsweise 2,0 Gew.-% gelöst wird. Dazu wird die innere Oberfläche des schlauchförmigen Mantels mit der Lösung benetzt, anschließend das Lösungsmittel verdampft und der beschichtete Schlauch dann getempert.

R) Die Verwendung des erfindungsgemäßen Flüssigkeitslichtleiter zum technischen Kleben durch lichtinduzierte Polymerisation, vorzugsweise im UV- bzw. Blaulichtbereich, insbesondere im Spektralbereich von 250 bis 500 nm.

S) Die Verwendung des erfindungsgemäßen Flüssigkeitslichtleiter zur technischen Endoskopie.

T) Die Verwendung des erfindungsgemäßen Flüssigkeitslichtleiter zur medizinischen Endoskopie.

U) Die Verwendung des erfindungsgemäßen Flüssigkeitslichtleiter zur Härtung von Zahnfüllungen durch lichtinduzierte Polymerisation von dentalen Komposite-Materialien, vorzugsweise im Blaulichtbereich (400 bis 500 nm).

V) Die Verwendung des erfindungsgemäßen Flüssigkeitslichtleiter zum Bleichen von Zähnen, vorzugsweise im UVA oder im Blaulichtbereich.

## Patentansprüche

1. Flüssigkeitslichtleiter aus einem zylindrischen, biegsamen schlauchförmigen Mantel aus einem Fluorkohlenstoff-Polymer, der innen mit einer Flüssigkeit mit einem Brechungsindex von $n > 1,33$ gefüllt ist, wobei der Mantel auf seiner Innenoberfläche mit einer auf dieser haftenden dünnen Schicht aus einem perfluorierten, amorphen und transparenten Fluorkohlenstoff-Polymer mit einem Brechungsindex von $n < 1,33$ beschichtet ist, **dadurch gekennzeichnet, dass** das die dünne Schicht bildende perfluorierte Fluorkohlenstoff-Polymer 10 bis 100 Mol% des perfluorierten, zyklischen Fluordioxolmonomers der Struktur

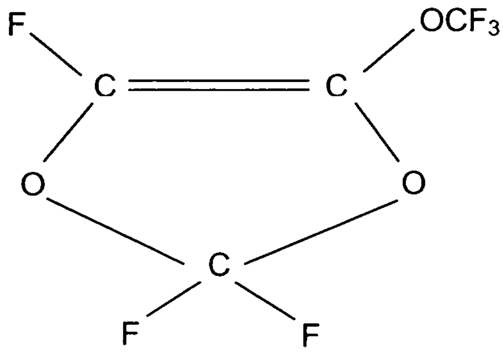

aufweist.

2. Flüssigkeitslichtleiter nach Anspruch 1, **dadurch gekennzeichnet, dass** das die dünne Schicht bildende perfluorierte Fluorkohlenstoff-Polymer das Homopolymer 2,2,4-Trifluor-5-trifluormethoxy-1,3-dioxol (TTD) enthält.

3. Flüssigkeitslichtleiter nach Anspruch 1, **dadurch gekennzeichnet, dass** das die dünne Schicht bildende perfluorierte Fluorkohlenstoff-Polymer neben dem Fluordioxol gemäß Anspruch 1 weitere copolymerisierbare, perfluorierte Monomer-Einheiten wie Tetrafluorethylen (TFE), Hexafluorpropylen (HFP), Perfluor-2,2-dimethyl-1,3-dioxol (PDD) und/oder Perfluoralkylvinylether enthält.

4. Flüssigkeitslichtleiter nach Anspruch 3, **dadurch gekennzeichnet, dass** das die dünne Schicht bildende perfluorierte Fluorkohlenstoff-Polymer als Monomer-Einheiten Tetrafluorethylen (TFE) und das Fluordioxol gemäß Anspruch 1 umfasst.

5. Flüssigkeitslichtleiter nach Anspruch 3, **dadurch gekennzeichnet, dass** das die dünne Schicht bildende perfluorierte Fluorkohlenstoff-Polymer ein Copolymer enthält, welches aus den Monomereinheiten von TFE und TTD zusammengesetzt ist und folgende Strukturformel hat:

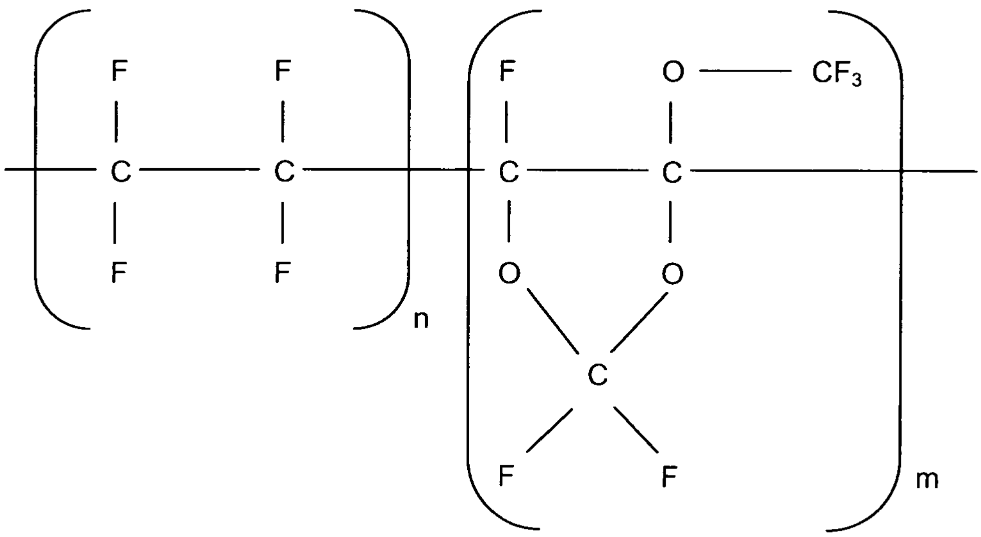

wobei vorzugsweise die Werte für n bzw. m so gewählt sind, dass etwa 60 Mol% TTD in dem Copolymer vorliegen.

6. Flüssigkeitslichtleiter nach Anspruch 1, **dadurch gekennzeichnet, dass** das die dünne Schicht bildende perfluorierte Fluorkohlenstoff-Polymer als Monomer-Einheiten mindestens zwei Fluordioxole unterschiedlicher Struktur umfasst.

7. Flüssigkeitslichtleiter nach Anspruch 6, **dadurch gekennzeichnet, dass** als weitere Monomer-Einheit im die dünne Schicht bildenden perfluorierten Fluorkohlenstoff-Polymer Tetrafluorethylen vorhanden ist.

8. Flüssigkeitslichtleiter nach Anspruch 1, **dadurch gekennzeichnet, dass** der Anteil an Fluordioxol in dem die dünne Schicht bildenden perfluorierten Fluorkohlenstoff-Polymer 20 bis 95 Mol% beträgt.

9. Flüssigkeitslichtleiter nach Anspruch 8, **dadurch gekennzeichnet, dass** der Anteil des Fluordioxols TTD zwischen 30 und 95%, vorzugsweise zwischen 50 und 95%, bezogen auf das Molgewicht des die dünne Schicht bildenden perfluorierten Fluorkohlenstoff-Polymers beträgt und dass die Glasübergangstemperatur dieses Polymers größer als 80°C ist.

10. Flüssigkeitslichtleiter nach mindestens einem der vorhergehenden Ansprüche, **dadurch gekennzeichnet, dass** die Glasübergangstemperatur des die dünne Schicht bildenden perfluorierten Fluorkohlenstoff-Polymers zwischen 60 und 240°C, vorzugsweise unterhalb 220°C liegt.

11. Flüssigkeitslichtleiter nach Anspruch 10, **dadurch gekennzeichnet, dass** die Glasübergangstemperatur des die dünne Schicht bildenden perfluorierten Fluorkohlenstoff-Polymers zwischen 60 und 170°C liegt.

12. Flüssigkeitslichtleiter nach mindestens einem der vorhergehenden Ansprüche, **dadurch gekennzeichnet, dass** der dünnen Schicht aus dem perfluorierten Fluorkohlenstoff-Polymer ein hochviskoser Perfluorpolyether mit einem Siedepunkt von mindestens 220°C beigemischt ist.

13. Flüssigkeitslichtleiter nach Anspruch 12, **dadurch gekennzeichnet, dass** der Perfluorpolyether dem die dünne Schicht bildenden perfluorierten Fluorkohlenstoff-Polymer in einem Verhältnis von 5:100 bis 200:100 Gewichtsteilen

beigemischt ist.

**14.** Flüssigkeitslichtleiter nach mindestens einem der vorhergehenden Ansprüche, **dadurch gekennzeichnet, dass** das die dünne Schicht bildende perfluorierte Fluorkohlenstoff-Polymer zusätzlich ein amorphes Copolymer enthält, das auf einer Kombination von Tetrafluorethylen und einem perfluorierten zyklischen Ether basiert.

**15.** Flüssigkeitslichtleiter nach Anspruch 14, **dadurch gekennzeichnet, dass** das amorphe Copolymer in der dünnen Schicht mit einem Gewichtsanteil zwischen 5% und 80% enthalten ist und dass die Glasübergangstemperatur des amorphen Copolymers zwischen 120°C und 240°C liegt.

**16.** Flüssigkeitslichtleiter nach mindestens einem der vorhergehenden Ansprüche, **dadurch gekennzeichnet, dass** die Dicke der dünnen Schicht zwischen 0,1 μm und 10 μm liegt.

**17.** Flüssigkeitslichtleiter nach Anspruch 16, **dadurch gekennzeichnet, dass** die Dicke der dünnen Schicht 2 μm bis 6 μm beträgt.

**18.** Flüssigkeitslichtleiter nach mindestens einem der vorhergehenden Ansprüche, **dadurch gekennzeichnet, dass** die den Innenraum des schlauchförmigen, innen beschichteten Mantels ausfüllende Flüssigkeit Wasser oder eine wässrige salzhaltige Lösung von z.B. $CaCl_2$ und/oder $CaBr_2$ oder $NaH_2PO_4$ ist, wobei Wasser auch schweres Wasser oder eine Mischung aus Wasser und schwerem Wasser sein kann.

**19.** Flüssigkeitslichtleiter nach mindestens einem der vorhergehenden Ansprüche, **dadurch gekennzeichnet, dass** die Flüssigkeit Glykol, wie Triethylenglykol, oder Dimethylsulfoxid (DMSO) enthält.

**20.** Verfahren zur Herstellung eines Flüssigkeitslichtleiters nach einem der Ansprüche 1 bis 19, **dadurch gekennzeichnet, dass** das die dünne Schicht bildende Fluorkohlenstoffpolymer in einer fluorierten oder perfluorierten Flüssigkeit im Konzentrationsbereich von mindestens 0,5 Gew.-% gelöst wird und dass die Bildung der dünnen Schicht des schlauchförmigen Mantels des Flüssigkeitslichtleiters durch Benetzung der Schlauchinnenoberfläche mit dieser Lösung und anschließende Verdampfung des Lösungsmittels sowie darauf folgende Temperung des beschichteten Schlauchs erfolgt.

**21.** Verwendung des Flüssigkeitslichtleiters nach einem der Ansprüche 1 bis 19 zum technischen Kleben durch lichtinduzierte Polymerisation, vorzugsweise im UV- bzw. Blaulichtbereich, insbesondere im Spektralbereich von 250 bis 500 nm.

**22.** Verwendung des Flüssigkeitslichtleiters nach einem der Ansprüche 1 bis 19 zur technischen Endoskopie.

**23.** Verwendung des Flüssigkeitslichtleiters nach einem der Ansprüche 1 bis 19 zur medizinischen Endoskopie.

**24.** Verwendung des Flüssigkeitslichtleiters nach einem der Ansprüche 1 bis 19 zur Härtung von Zahnfüllungen durch lichtinduzierte Polymerisation von dentalen Komposite-Materialien, vorzugsweise im Blaulichtbereich von 400 bis 500 nm.

**25.** Verwendung des Flüssigkeitslichtleiters nach einem der Ansprüche 1 bis 19 zum Bleichen von Zähnen, vorzugsweise im UVA- oder im Blaulichtbereich.

### Claims

**1.** Liquid light guide made from a cylindrical, flexible tube-like shell made from a fluorocarbon polymer which is filled on the inside with a liquid having a refractive index of n > 1.33, wherein the shell is coated on its inner surface with a thin layer adhering to the latter made from a perfluorinated, amorphous and transparent fluorocarbon polymer having a refractive index ofn < 1.33, **characterised in that** the perfluorinated fluorocarbon polymer forming the thin layer has 10 to 100 mole% of the perfluorinated, cyclic fluorodioxole monomer of the structure

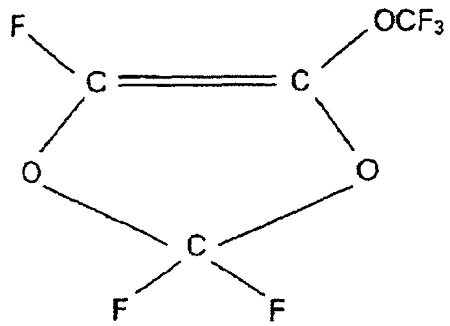

2. Liquid light guide according to claim 1, **characterised in that** the perfluorinated fluorocarbon polymer forming the thin layer contains the homopolymer 2,2,4-trifluoro-5-trifluoromethoxy-1,3-dioxole (TTD).

3. Liquid light guide according to claim 1, **characterised in that** the perfluorinated fluorocarbon polymer forming the thin layer, in addition to the fluorodioxole according to claim 1, contains further copolymerisable, perfluorinated monomer units, such as tetrafluoroethylene (TFE), bexafluoropropylene (HFP), perfluoro-2,2-dimethyl-1,3-dioxole (PDD) and/or perfluoroalkyl vinyl ether.

4. Liquid light guide according to claim 3, **characterised in that** the perfluorinated fluorocarbon polymer forming the thin layer comprises as monomer units tetrafluoroethylene (TFE) and the fluorodioxole according to claim 1.

5. Liquid light guide according to claim 3, **characterised in that** the perfluorinated fluorocarbon polymer forming the thin layer contains a copolymer which is composed of the monomer units of TFE and TTD and has the following structural formula:

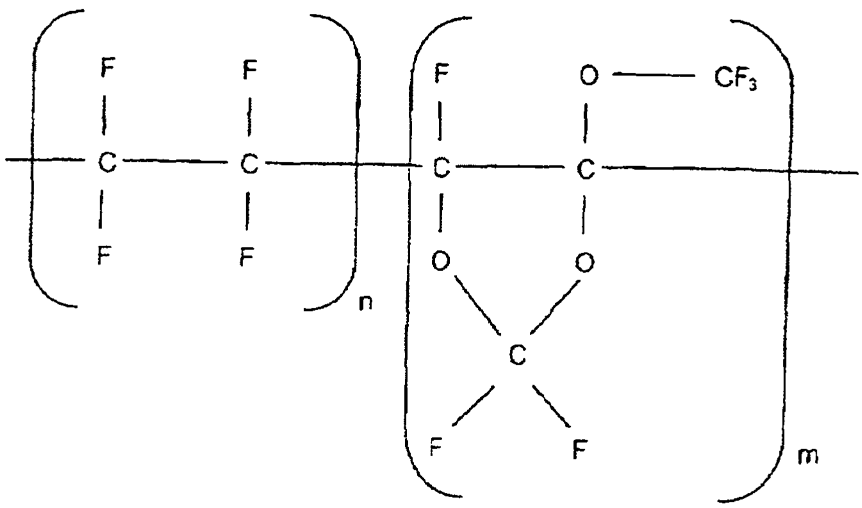

wherein preferably the values for n or m are selected so that about 60 mole% of TTD is present in the copolymer.

6. Liquid light guide according to claim 1, **characterised in that** the perfluorinated fluorocarbon polymer forming the thin layer comprises as monomer units at least two fluorodiaxoles of different structure.

7. Liquid light guide according to claim 6, **characterised in that** as a further monomer unit in the perfluorinated fluorocarbon polymer forming the thin layer, tetrafluoroethylene is present.

**8.** Liquid light guide according to claim 1, **characterised in that** the proportion of fluorodioxole in the perfluorinated fluorocarbon polymer forming the thin layer is 20 to 95 mole%.

**9.** Liquid light guide according to claim 8, **characterised in that** the proportion of fluorodioxole TTD is between 30 and 95%, preferably between 50 and 95%, relative to the molecular weight of the perfluorinated fluorocarbon polymer forming the thin layer and **in that** the glass transition temperature of this polymer is greater than 80°C.

**10.** Liquid light guide according to at least one of the preceding claims, **characterised in that** the glass transition temperature of the perfluorinated fluorocarbon polymer forming the thin layer lies between 60 and 240°C, preferably below 220°C.

**11.** Liquid light guide according to claim 10, **characterised in that** the glass transition temperature of the perfluorinated fluorocarbon polymer forming the thin layer lies between 60 and 170°C.

**12.** Liquid light guide according to at least one of the preceding claims, **characterised in that** a highly viscous perfluoropolyether having a boiling point of at least 220°C is admixed to the thin layer of the perfluorinated fluorocarbon polymer.

**13.** Liquid light guide according to claim 12, **characterised in that** the perfluoropolyether is admixed to the perfluorinated fluorocarbon polymer forming the thin layer in a ratio of 5:100 to 200: 100 parts by weight.

**14.** Liquid light guide according to at least one of the preceding claims, **characterised in that** the perfluorinated fluorocarbon polymer forming the thin layer additionally contains an amorphous copolymer, which is based on a combination of tetrafluoroethylene and a perfluorinated cyclic ether.

**15.** Liquid light guide according to claim 14, **characterised in that** the amorphous copolymer is present in the thin layer with a weight proportion between 5% and 80% and **in that** the glass transition temperature of the amorphous copolymer lies between 120°C and 240°C.

**16.** Liquid light guide according to at least one of the preceding claims, **characterised in that** the thickness of the thin layer lies between 0.1 μm and 10 μm.

**17.** Liquid light guide according to claim 16, **characterised in that** the thickness of the thin layer is 2 μm to 6 μm.

**18.** Liquid light guide according to at least one of the preceding claims, **characterised in that** the liquid filling the interior of the tube-like, inner-coated shell is water or an aqueous salt-containing solution of, for example $CaCl_2$ and/or $CaBr_2$ or $NaH_2PO_4$, wherein water may also be heavy water or a mixture of water and heavy water.

**19.** Liquid light guide according to at least one of the preceding claims, **characterised in that** the liquid contains glycol, such as triethylene glycol, or dimethylsulphoxide (DMSO).

**20.** Process for producing a liquid light guide according to one of claims 1 to 19, **characterised in that** the fluorocarbon polymer forming the thin layer is dissolved in a fluorinated or perfluorinated liquid in the concentration range of at least 0.5 wt.% and **in that** the formation of the thin layer of the tube-like shell of the liquid light guide is effected by wetting the tube inner surface with this solution and subsequent evaporation of the solvent as well as tempering of the coated tube following that

**21.** Use of the liquid light guide according to one of claims 1 to 19 for industrial adhesion by light-induced polymerisation, preferably in the UV or blue-light range, in particular in the spectral range from 250 to 500 nm.

**22.** Use of the liquid light guide according to one of claims 1 to 19 for industrial endoscopy.

**23.** Use of the liquid light guide according to one of claims 1 to 19 for medical endoscopy.

**24.** Use of the liquid light guide according to one of claims 1 to 9 for hardening tooth fillings by light-induced polymerisation of dental composite materials, preferably in the blue-light range from 400 to 500 nm.

**25.** Use of the liquid light guide according to one of claims 1 to 19 for bleaching teeth, preferably in the UVA or in the

blue-light range.

**Revendications**

1. Guide de lumière à coeur liquide comprenant une gaine tubulaire, cylindrique, flexible, en polymère fluorocarbone, qui est rempli intérieurement d'un liquide d'indice de réfraction n > 1,33, la gaine étant recouverte sur sa surface interne d'une couche mince adhérant à celle-ci composée d'un polymère fluorocarbone perfluoré, amorphe et transparent d'indice de réfraction n < 1,33, **caractérisé en ce que** le polymère fluorocarbone perfluoré formant la couche fine présente 10 à 100 % en moles du monomère fluorodioxol cyclique, perfluoré de structure :

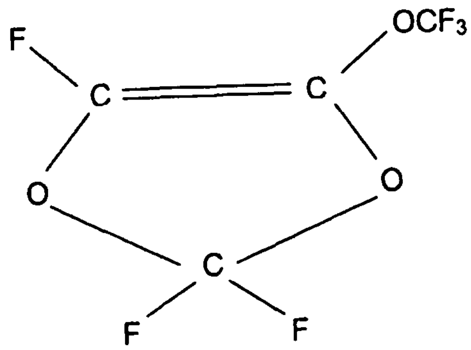

2. Guide de lumière à coeur liquide selon la revendication 1, **caractérisé en ce que** le polymère fluorocarbone perfluoré formant la fine couche contient l'homopolymère 2,2,4-trifluoro-5-trifluorméthoxy-1,3-dioxol (TTD).

3. Guide de lumière à coeur liquide selon la revendication 1, **caractérisé en ce que** le polymère fluorocarbone perfluoré formant la fine couche, conjointement avec le fluorodioxol selon la revendication 1, contient d'autres unités monomères perfluorées, copolymérisables comme le tétrafluoroéthylène (TFE), l'hexafluoropropylène (HFP), le perfluoro-2,2-diméthyl-1,3-dioxol (PDD) et/ou un perfluoroalkylvinyléther.

4. Guide de lumière à coeur liquide selon la revendication 3, **caractérisé en ce que** le polymère fluorocarbone perfluoré formant la fine couche comprend comme unités monomères le tétrafluoroéthylène (TFE), et le fluorodioxol selon la revendication 1.

5. Guide de lumière à coeur liquide selon la revendication 3, **caractérisé en ce que** le polymère fluorocarbone perfluoré formant la fine couche contient un copolymère, lequel est composé des unités monomères de TFE et de TTD et possède la formule structurale suivante :

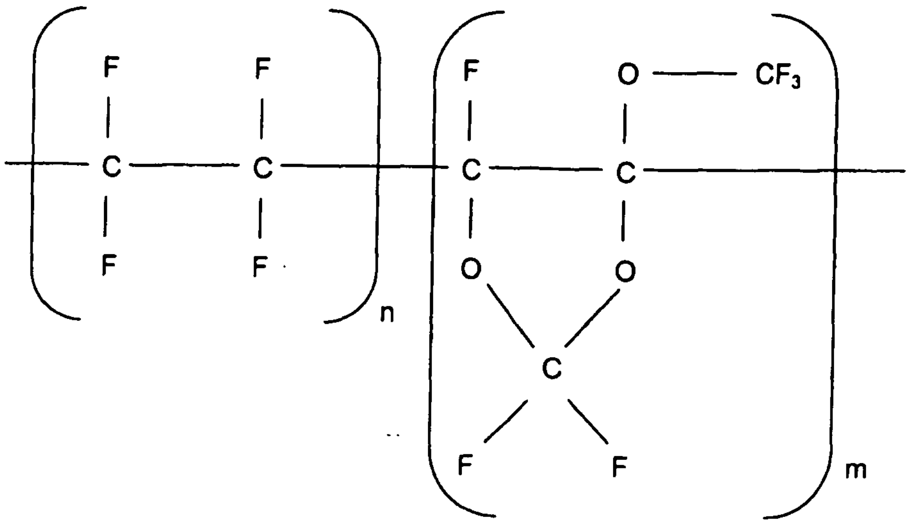

dans laquelle, de préférence, les valeurs respectivement de n et m sont choisies de telle sorte que le copolymère contient environ 60 % en moles de TTD.

6. Guide de lumière à coeur liquide selon la revendication 1, **caractérisé en ce que** le polymère fluorocarbone perfluoré formant la fine couche comprend comme unités monomères au moins deux fluorodioxols de structure différente.

7. Guide de lumière à coeur liquide selon la revendication 6, **caractérisé en ce que**, dans le polymère fluorocarbone perfluoré formant la fine couche, du tétrafluoroéthylène est présent comme autre unité de monomère.

8. Guide de lumière à coeur liquide selon la revendication 1, **caractérisé en ce que**, dans le polymère fluorocarbone perfluoré formant la fine couche, la teneur en fluorodioxol est comprise entre 20 et 95 % molaires.

9. Guide de lumière à coeur liquide selon la revendication 8, **caractérisé en ce que** la proportion de fluorodioxol TTD vaut entre 30 et 95 %, de préférence entre 50 et 95 %, par rapport à la masse molaire du polymère fluorocarbone perfluoré formant la fine couche, et que la température de transition vitreuse de ce polymère est supérieure à 80 °C.

10. Guide de lumière à coeur liquide selon au moins l'une des revendications précédentes, **caractérisé en ce que** la température de transition vitreuse du polymère fluorocarbone perfluoré formant la fine couche se situe entre 60 et 240 °C, de préférence au-dessous de 220 °C.

11. Guide de lumière à coeur liquide selon la revendication 10, **caractérisé en ce que** la température de transition vitreuse du polymère fluorocarbone perfluoré formant la fine couche se situe entre 60 et 170 °C.

12. Guide de lumière à coeur liquide selon au moins l'une des revendications précédentes, **caractérisé en ce qu'**un perfluoropolyéther de viscosité élevée, ayant un point d'ébullition d'au moins 220 °C, est ajouté et mélangé à la fine couche constituée de polymère fluorocarbone perfluoré.

13. Guide de lumière à coeur liquide selon la revendication 12, **caractérisé en ce que** le perfluoropolyéther est mélangé au polymère fluorocarbone perfluoré formant la fine couche dans un rapport de parties pondérales de 5/100 à 200/100.

14. Guide de lumière à coeur liquide selon au moins l'une des revendications précédentes, **caractérisé en ce que** le polymère fluorocarbone perfluoré formant la fine couche contient en outre un copolymère amorphe qui est basé sur une combinaison de tétrafluoroéthylène et d'un éther cyclique perfluoré.

15. Guide de lumière à coeur liquide selon la revendication 14, **caractérisé en ce que** le copolymère amorphe est contenu dans la fine couche avec une teneur en poids entre 5 % et 80 % et que la température de transition vitreuse du copolymère amorphe se situe entre 120 °C et 240 °C.

**16.** Guide de lumière à coeur liquide selon au moins l'une des revendications précédentes, **caractérisé en ce que** l'épaisseur de la couche fine se situe entre 0,1 $\mu$m et 10 $\mu$m.

**17.** Guide de lumière à coeur liquide selon la revendication 16, **caractérisé en ce que** l'épaisseur de la couche fine se situe entre 2 $\mu$m et 6 $\mu$m.

**18.** Guide de lumière à coeur liquide selon au moins l'une des revendications précédentes, **caractérisé en ce que** le liquide, qui remplit l'espace intérieur de la gaine tubulaire, recouverte d'un revêtement intérieur, est de l'eau ou une solution aqueuse saline de, par exemple, $CaCl_2$ et/ou $CaBr_2$ ou $NaH_2PO_4$, dans lequel l'eau peut être aussi de l'eau lourde ou un mélange d'eau et d'eau lourde.

**19.** Guide de lumière à coeur liquide selon au moins l'une des revendications précédentes, **caractérisé en ce que** le liquide contient du glycol, comme le triéthylène glycol, ou le diméthylsulfoxyde (DMSO).

**20.** Procédé de fabrication d'un guide de lumière à coeur liquide selon l'une quelconque des revendications 1 à 19, **caractérisé en ce que** le polymère fluorocarbone formant la fine couche est dissout dans un liquide fluoré ou perfluoré à une concentration d'au moins 0,5 % en poids et **en ce que** la formation de la fine couche de la gaine tubulaire du guide de lumière à coeur liquide est réalisée par mouillage de la surface tubulaire intérieure avec cette solution et évaporation subséquente du solvant ainsi qu'une mise à température subséquente du tube revêtu.

**21.** Utilisation du guide de lumière à coeur liquide selon l'une quelconque des revendications 1 à 19 pour le collage technique par polymérisation induite par la lumière, de préférence dans le domaine de la lumière UV ou de la lumière bleue, en particulier dans un domaine spectral allant de 250 à 500 nm.

**22.** Utilisation du guide de lumière à coeur liquide selon l'une quelconque des revendications 1 à 19 pour l'endoscopie technique.

**23.** Utilisation du guide de lumière à coeur liquide selon l'une quelconque des revendications 1 à 19 pour l'endoscopie à usage médical.

**24.** Utilisation du guide de lumière à coeur liquide selon l'une quelconque des revendications 1 à 19 pour le durcissement de remplissages dentaires ou plombages par polymérisation induite par la lumière de matériaux composites dentaires, de préférence dans le domaine de la lumière bleue allant de 400 à 500 nm.

**25.** Utilisation du guide de lumière à coeur liquide selon l'une quelconque des revendications 1 à 19 pour le blanchiment des dents, de préférence, dans le domaine de la lumière UVA ou de la lumière bleue.